# EUROPÄISCHE PATENTANMELDUNG

(11) **EP 0 724 110 A1**
(43) Veröffentlichungstag der Anmeldung: **31.07.1996**
(21) Anmeldenummer: 95119011.5
(22) Anmeldetag: 02.12.1995
(51) Int. Cl.: F16L 55/033, F16L 55/02, B60K 15/01

(54) **Lärmdämpfungsrohr**

(30) Priorität: 24.01.1995 DE 19501981; 11.05.1995 DE 19517382
(71) Anmelder: FILTERWERK MANN & HUMMEL GMBH, D-71631 Ludwigsburg (DE)
(72) Erfinder: Füsser, Rolf, D-76332 Bad Herrenalb (DE); Knoch, Georg, D-71642 Ludwigsburg (DE); Müller, Heinz, D-71686 Remseck (DE); Spannbauer, Helmut, D-71640 Ludwigsburg (DE); Weindorf, Martin, D-70806 Kornwestheim (DE)
(74) Vertreter: Voth, Gerhard, Dipl.-Ing.

(57) **Zusammenfassung**

Beschrieben wird ein Rohr im Ansaugtrakt einer Brennkraftmaschine, dessen Innendurchmesser in Abhängigkeit des Betriebszustandes der Brennkraftmaschine veränderbar ist.

## Beschreibung

Die Erfindung betrifft ein Rohr, insbesondere im Ansaugtrakt einer Brennkraftmaschine.

Derartige Rohre sind bekannt, zum Beispiel als Ansaugrohre mit konstantem Innendurchmesser bei Verbrennungsmotoren. Will man derartige Ansaugrohre zum Beispiel in PKWs, bei denen die Anforderung bezüglich der Geräuschentwicklung besonders hoch ist, einsetzen, so ist daran nachteilig, daß in bestimmten Drehzahlbereichen der Schalldruckpegel tiefer Töne hoch ist.

Man könnte nun die Länge des Ansaugrohres insgesamt verlängern oder den Durchmesser verringern, was aber in hohen Drehzahlbereichen einen zu hohen Strömungswiderstand zur Folge hätte. Dies ist aber meist aus technischen Gründen nicht möglich. Eine andere Variante könnte darstellen die Anbringung von Helmholtzresonatoren. Dies ist aber aufwendig, der Platz im Motorinnenraum ist häufig sehr stark eingeschränkt.

Es ist somit Aufgabe der Erfindung, ein Rohr der eingangs genannten Art dahingehend zu verbessern, daß ein Rohr geschaffen wird, dessen Innendurchmesser einfach, leicht und sicher zu verändern ist.

Erfindungsgemäß wird diese Aufgabe dadurch gelöst, daß die Innenrohroberfläche wenigstens ein den Innenrohrdurchmesser veränderndes Element aufweist. Bei niedrigen Drehzahlen genügt strömungstechnisch ein deutlich geringerer Rohrquerschnitt, als der, der in der Regel für den maximalen Lastfall ausgelegt ist.

Dieser durch das den Querschnitt verengende Element hervorgerufene geringere Rohrdurchmesser sorgt für wesentlich niedrigere Lärmemission im Ansaugbereich. Die Möglichkeit den Querschnitt zu verändern ermöglicht ein jeweils optimales Verhältnis von Ansauggeräusch zu Leistung und Verbrauch. Bei niederen Drehzahlen mit engem Querschnitt wird das Ansauggeräusch gedämpft. Im höheren Drehzahlbereich mit großem Querschnitt wird der Strömungswiderstand klein gehalten.

Eine vorteilhafte Weiterbildung der Erfindung sieht vor, daß das den Innenrohrdurchmesser verändernde Element als Schwellkörper ausgebildet ist. Dieser Schwellkörper gleitet das Innenrohr so aus, daß eventuelle Querschnittsveränderungen stufenlos und konzentrisch erfolgen. Die Volumenänderung erfolgt mittels eines Hilfsmittels. Durch das Zu- oder Abführen des Hilfsmittels verändert sich die elastische Hülle des Schwellkörpers und verändert sein eigenes Volumen.

Weiterhin kann man vorteilhafter Weise vorsehen, daß die den Innenrohrdurchmesser verändernden Elemente aus zum Beispiel wenigstens zwei Schalensegmenten bestehen, die durch Relativbewegung ähnlich einer irisblendenden Innenrohrdurchmesser definieren.

Eine weitere vorteilhafte Weiterbildung der Erfindung sieht vor, daß der volumenveränderbare Schwellkörper Stützeinsätze aufweist, die insbesondere aus PUR-Schaum bestehen.

Der Vorteil insbesondere von PUR-Stützkörpern, die vorzugsweise segmentartig aufgebaut sind, besteht in der Doppelfunktion Stützen einerseits und bei entsprechender Querschnittsvergrößerung Veränderung des eigenen Volumens andererseits.

Eine andere vorteilhafte Weiterbildung sieht vor, daß der volumenveränderbare Schwellkörper mit dem Ansaugsystem und/oder der Steuerelektrik der Brennkraftmaschine kommuniziert. Auf diese Weise ist eine kontrollierte Querschnittsänderung des Rohres zu realisieren.

Eine vorteilhafte Weiterbildung der Erfindung sieht vor, daß der volumenveränderbare Schwellkörper ein Unterdruckanschluß aufweist. Mittels dieses Unterdruckanschlusses und dem entsprechenden Anlegen von Unterdruck, insbesondere über den Ansaugbereich an den Schwellkörper, erfolgt ein drehzahlabhängiges veränderndes Innenrohrquerschnittes, welches zum Beispiel von wenigstens einem elektrisch und/oder pneumatisch wirkendem Ventil unterstützt wird. Die Regelung erfolgt im wesentlichen in Abhängigkeit vom Druckabfall im Bereich des Luftfilters.

Weiterhin kann man vorsehen, daß das Rohr als Diffusor ausgebildet ist. Das Rohr wird zum akustischen Hals.

Eine weitere vorteilhafte Weiterbildung der Erfindung sieht vor, daß die Volumenänderung pneumatisch und/oder hydraulisch und/oder elektrisch und/oder mechanisch erfolgt. Als Hilfsenergielieferanten für die Volumenänderung insbesondere im rohluftseitigen Ansaugrohr, können die bordeigene Fluidströme, Seilzüge und/oder Elektromotoren dienen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. Die Zeichnungen zeigen:
- Figur 1: einen Längsschnitt durch ein Dämpferrohr,
- Figur 2: eine Darstellung entlang der Linie B-B,

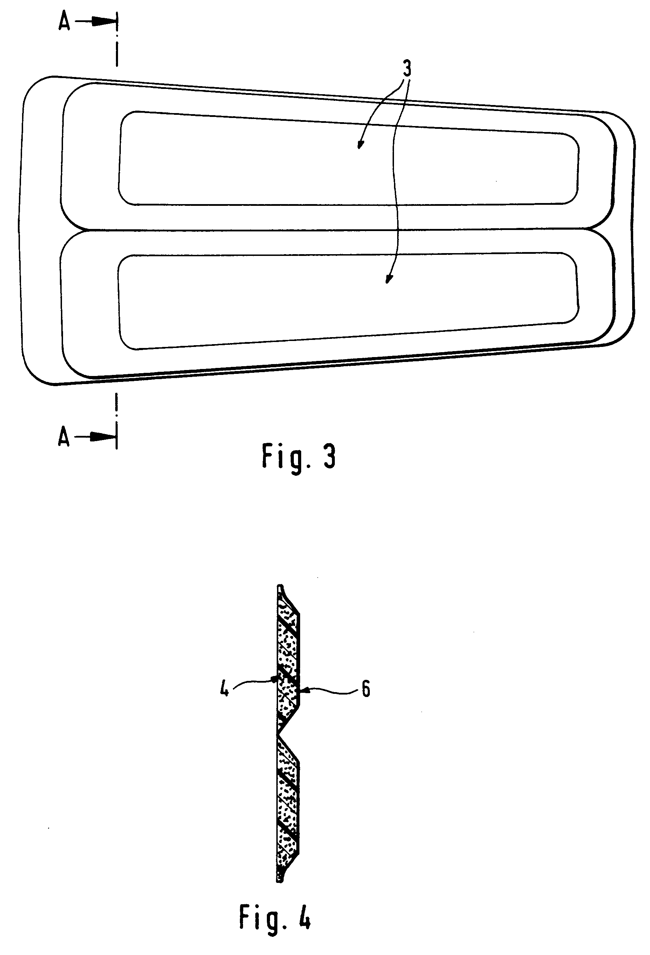

- Figur 3: eine Darstellung im Rohr,
- Figur 4: eine Darstellung entlang der Linie A-A,
- Figur 5: Darstellung der Druckregelung,
- Figur 6: einen Längsschnitt durch ein Dämpferrohr mit eingesetzten rohrförmigen Schlauchabschnitten,
- Figur 6a: einen Schnitt entlang C-C,
- Figur 7: eine Schnittdarstellung, die Fixierung der Schlauchabschnitte mittels Einsatz 12,
- Figur 8: einen Längsschnitt durch ein Dämpferrohr ohne Schlauchabschnitte,
- Figur 8a: einen Schnitt entlang D-D,
- Figur 9: einen Längsschnitt durch ein Ausführungsbeispiel, bei der das den Innenrohrdurchmesser verändernde Element regelförmig ist,
- Figur 9a: einen Schnitt entlang E-E,
- Figur 9b: einen Schnitt entlang F-F.

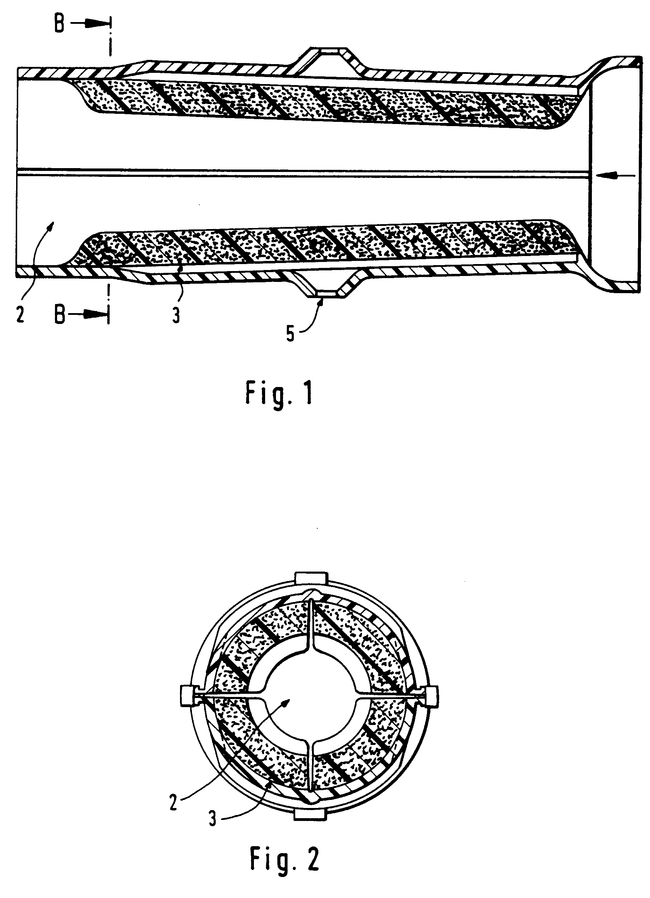

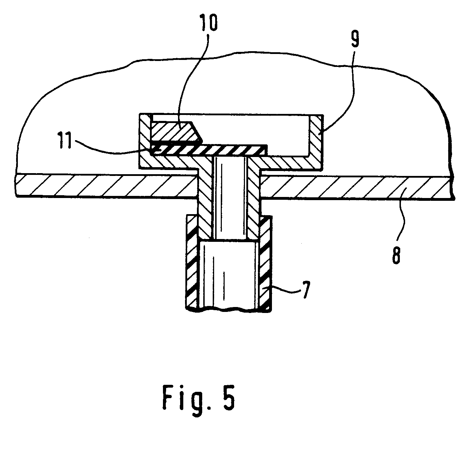

Das Rohr besteht aus einer Innenrohroberfläche 1, auf der ein den Innenrohrdurchmesser 2 veränderndes Element 3 angebracht ist. In Figur 1 wird ein Schwellkörper dargestellt, der den Innenrohrdurchmeser reduziert. Der Schwellkörper besteht, wie in Figur 4 deutlich zu erkennen ist, aus einem offenporigen, luftdurchlässigen Stützeinsatz 4 aus PUR-Schaum sowie einer luftundurchlässigen Schicht 6. Zur Innenrohrdurchmessererweiterung wird über Unterdruckanschluß 5 der Gasanteil im Schwellkörper 3 teilweise bzw. ganz evakuiert. Das Anlegen des Unterdrucks an den Schwellkörper erfolgt analog der Unterdruckverstellung an der Zündung.

In Figur 4 wird eine Variante mit 4 Schwellkörpern 3 dargestellt. Die geometrische Ausgestaltung des Schwellkörpers 3 garantiert beim Anlegen des Unterdrucks ein nahezu konzentrisches Anwachsen des Innenrohrdurchmessers 2 sowie die Beibehaltung der Diffusorkonizität.

Ein weiteres Ausführungsbeispiel sieht vor, daß die Elemente 3 zum Beispiels aus gegeneinander bewegten Schalensegmenten bestehen, die über Seilzüge oder Elektromotoren in Abhängigkeit vom Betriebszustand der Verbrennungsmaschine angetrieben werden. Ein spezielles Ausführungsbeispiel sieht vor, daß die Schalensegmente vergleichbar einer Irisblende bewegt werden. In einem anderen Ausführungsbeispiel werden zwei Halbschalen so an ihrem einen Ende verbunden, daß durch eine Bewegung an ihrem anderen Ende zwar die einen Enden der Halbschalen einen konstanten Innenrohrdurchmesser bilden, sich die anderen Enden jedoch entweder aufeinander zu- oder voneinander wegbewegen und so ein Durchmesseränderung bewirken.

In einem weiteren Ausführungsbeispiel ist, wie in Figur 5 dargestellt, der Schlauchanschluß 7 mit dem Unterdruckanschluß 5 aus Figur 1 verbunden. Der Ventilträgerkörper 9 ist an der Trennwand der Ansauganlage von innen nach außen durchgesteckt und an der äußeren Seite mit dem Schlauchanschluß 7 verbunden. Der Ventilträgerkörper 9 enthält ein Rückschlagventil, welches bevorzugt aus einem Silikongummiblättchen 11 und einem Gummispannhalter 10 besteht. Eine Ausführung des Rückschlagventils aus Blech, insbesondere einer Metallfolie ist ebenfalls denkbar. Der Einsatz des Rückschlagventils ist insbesondere hilfreich, da die erforderlichen Steuerdrücke zur Veränderung des Innendurchmessers des Rohrs zwischen 0 und -100 mbar liegen, die Volumenreduzierung des Schaumstoffs bei etwa -20 mbar beginnt und bei etwa -100 mbar ihren Höhepunkt erreicht, durch Pulsation im Saugsystem sich bei Vollast aber lediglich ein Mittelwert von -65 mbar einstellt. Durch das Rückschlagventil wird der Maximalwert von -100 mbar jedoch nutzbar gemacht. Vorzugsweise wird der Ventilträgerkörper in Strömungsrichtung vor der Drosselklappe angebracht, denkbar ist aber auch eine Befestigung dahinter.

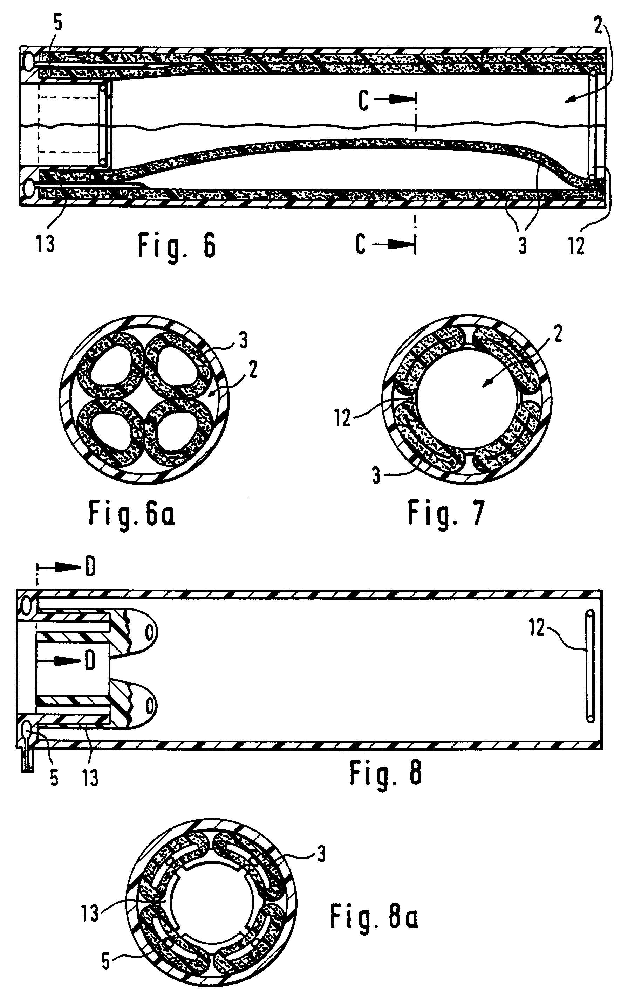

In einem speziellen Ausführungsbeispiel besteht das den Innenrohrdurchmesser 2 verändernde Element 3 aus, wie in Figur 6 dargestellt, rohrförmigen Schlauchabschnitten.

Vorzugsweise sind die rohrförmigen Schlauchabschnitte aus Kunststoff hergestellt. In einer alternativen Ausgestaltung bestehen sie aus geschäumtem Extrudermaterial. Die Befestigung innerhalb des Ansaugtraktes, wie in Figur 6 zu sehen ist, erfolgt mittels ringförmiger Einsätze 12 bzw. einem ringförmigen Einsatz 13 mit einem für jedes den Innenrohrdurchmesser 2 veränderndes Element versehenen integrierten Unterdruckanschluß 5. Mittels der ringförmigen Einsätze 12 und 13 werden sowohl die rohrförmigen Schlauchabschnitte fixiert als auch gegen das Ansaugtraktgehäuse hin druckdicht abgedichtet.

Wie in Figur 6 dargestellt, haben vier solcher kissenförmiger Körper in einem Rohr Platz.

In einer alternativen Ausgestaltung sind die den Innenrohrdurchmesser 2 verändernden Elemente 3 von zungenförmig ausgelegten Einsätzen 13 so fixiert, daß die Innengeometrie des Ansaugtraktes, wie in Figur 8 dargestellt, als Diffusor wirkt.

Durch die formschlüssige Verspannung zwischen den rohrförmigen Schlauchabschnitten und den ringförmigen Einsätzen 12 und 13 entstehen z.B. vier luftgefüllte Elemente 3, die mittels Unterdruckanschluß 5 in Abhängigkeit des Betriebszustandes der Verbrennungskraftmaschine im Volumen veränderbar sind. Der Unterdruckanschluß 5 kann beispielsweise mit der Zustromleitung eines Turboladers kommunizieren. Denkbar ist aber auch jede andere Unterdruckquelle zur Steuerung des Ansaugtraktinnendurchmessers im Umfeld einer Verbrennungskraftmaschine.

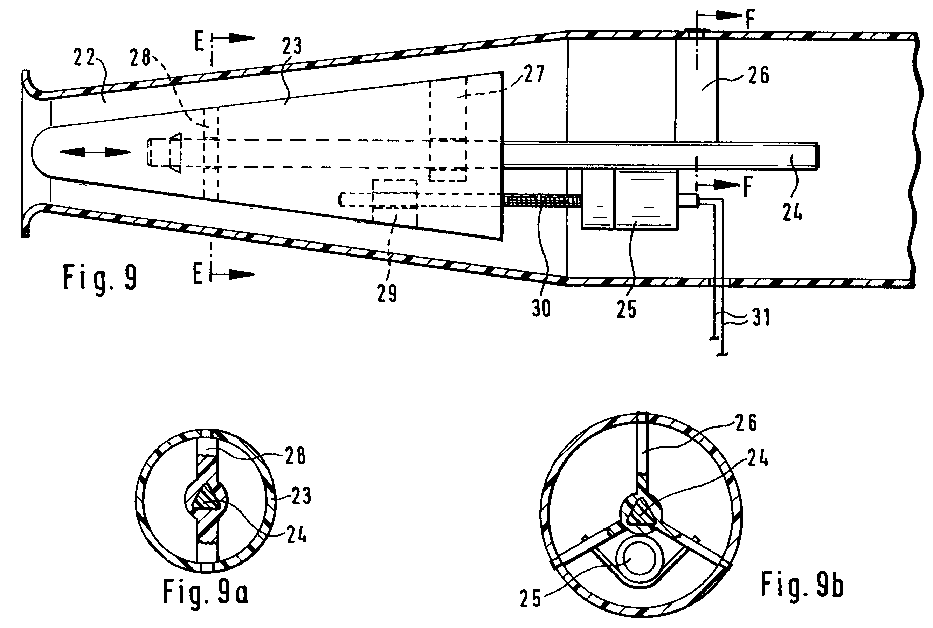

In einem weiteren Ausführungsbeispiel, daß in den Figuren 9, 9a und 9b dargestellt wird, befindet sich im Inneren des Ansaugrohres, insbesondere auf der Rohluftseite ein in und entgegen der Strömungsrichtung der Ansaugluft bewegliches Element.

Indem als Diffusor ausgebildeten Ansaugrohr 21 ist ein Innenkegel 23 eingesetzt, der mittels der Stützen 26, 27, 28 und dem Stützstab 24 befestigt.

Wird nun eine vom Zustand der Verbrennungskraftmaschine abhängiges Signal über die Signalleitungen 31 an die Stelleinrichtung 25 gegeben, so kann die Stelleinrichtung 25, die hier als Elektromotor ausgebildet ist, eine Längsverschiebung des Innenkegels 23 mittels des Verschiebeelements 30 und der Aufnahme 29 bewirken.

Wird der Innenkegel nun entgegen der Strömungsrichtung bewegt, so verringert sich der zwischen Rohrwand und Innenkegel verbleibende Ringspalt zunehmend, die Ansauggeräusche werden reduziert.

Der Innenkegel 23 ist wie in Figur 9a dargestellt hohl und sitzt auf einem profilierten Stützstab 24.

Die Steuerung der Stelleinrichtung 25 erfolgt über zum Beispiel das im Kraftfahrzeug vorhandene Motorsteuergerät in Abhängigkeit von dort verfügbaren Kenndaten wie zum Beispiel Teillast-Vollast, bzw. Drehzahl-Last etc. Die Herstellung der Stelleinrichtung 25 wird in Figur 9b mittels der Stütze 26 dargestellt. Die Längsverschiebung des Innenkegels 23 erfolgt im dargestellten Ausführungsbeispiel über Verschiebeelement 30, das als Schnecke ausgebildet ist, die eine entsprechende Lagerung in Aufnahme 29 findet. Der Stützstab 24 ist in Stütze 28 im Inneren des Innenkegels axial verschieblich gelagert. Ebenfalls axialtolerant gelagert ist Stützstab 24 in der Stütze 27 des Innenkegels 23.

## Patentansprüche

1. Rohr, insbesondere im Ansaugtrakt einer Brennkraftmaschine, dadurch gekennzeichnet, daß die Innenrohroberfläche 1 wenigstens ein den Innenrohrdurchmesser 2 veränderndes Element 3 aufweist.

2. Rohr, nach Anspruch 1, dadurch gekennzeichnet, daß die Innenrohroberfläche wenigstens einen volumenveränderbaren Schwellkörper 3 aufweist.

3. Rohr, nach einem oder mehreren der vorgenannten Ansprüche, dadurch gekennzeichnet, daß die Innenrohroberfläche wenigstens zwei gegeneinander bewegliche Elemente aufweist.

4. Rohr, nach einem oder mehreren der vorgenannten Ansprüche, dadurch gekennzeichnet, daß der volumenveränderbare Schwellkörper 3 Stützeinsätze 4 aufweist, insbesondere geschäumte.

5. Rohr, nach einem oder mehreren der vorgenannten Ansprüche, dadurch gekennzeichnet, daß der volumenveränderbare Schwellkörper 3 mit dem Ansaugsystem und/oder der Steuerelektrik der Brennkraftmaschine kommuniziert.

6. Rohr, nach einem oder mehreren der vorgenannten Ansprüche, dadurch gekennzeichnet, daß der volumenveränderbare Schwellkörper 3 einen Unterdruckanschluß 5 aufweist.

7. Rohr, nach einem oder mehreren der vorgenannten Ansprüche, dadurch gekennzeichnet, daß die Volumenänderung des Schwellkörpers mitttels Unterdruck erfolgt.

8. Rohr, nach einem oder mehreren der vorgenannten Ansprüche, dadurch gekennzeichnet, daß die Volumenänderung der Schwellkörper volumenstromabhängig erfolgt.

9. Rohr, nach einem oder mehreren der vorgenannten Ansprüche, dadurch gekennzeichnet, daß das Rohr als Diffusor ausgebildet ist.

10. Rohr, nach einem oder mehreren der vorgenannten Ansprüche, dadurch gekennzeichnet, daß die Volumenänderung pneumatisch und/oder hydraulisch und/oder elektrisch oder mechanisch erfolgt.

11. Rohr, nach einem oder mehreren der vorgenannten Ansprüche, dadurch gekennzeichnet, daß das Element 3 eine luftundurchlässige Schicht 6 aufweist.

12. Rohr, insbesondere im Ansaugtrakt einer Brennkraftmaschine, dadurch gekennzeichnet, daß das Rohr ein seine Innenrohrquerschnittsfläche 22 verändernde Elemente 23 aufweist.
